# EUROPÄISCHE PATENTSCHRIFT

(11) **EP 0 486 976 B1**
(45) Veröffentlichungstag und Bekanntmachung des Hinweises auf die Patenterteilung: **03.08.1994**
(21) Anmeldenummer: 91119571.7
(22) Anmeldetag: 16.11.1991
(51) Int. Cl.: E21B 43/38, E21B 43/40, E02D 31/00, B01D 19/00

(54) **Anordnung zum Reinigen von verschmutztem Grundwasser**
Device for the purification of polluted ground water
Dispositif pour la pourification des eaux souterraines polluées

(30) Priorität: 22.11.1990 DE 4037059
(43) Veröffentlichungstag der Anmeldung: 27.05.1992
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- EP-A- 0 328 993
- EP-A- 0 418 570
- EP-A- 0 418 572
- DE-U- 9 005 565
- PATENT ABSTRACTS OF JAPAN vol. 11, no. 48 (M-561)(2495)
- 13. Februar 1987 & JP-A-61 211 415 ( TAKENAKA KOMUTEN CO LTD ) 19. September 1986

## Beschreibung

Die Erfindung betrifft eine Anordnung zum Reinigen von verschmutzten Grundwasser und dem von ihm durchströmten Erdreich, mit einem bis in den Bereich des zu reinigenden Grundwassers getriebenen Schacht mit durch eine unterhalb des Grundwasserspiegels des Schachtes befindliche Trennwandung gegeneinander abgedichteten Brunnenschachtbereichen mit wasserdurchlässiger Schachtwandung zum Wasseransaugen aus dem Erdreich und zur Wiedereinleitung des Wassers in das Erdreich, und mit einem die Trennwandung durchstoßenden Kanal als Teil eines Strömungsweges, der über eine Wasserumwälzpumpe und Filter führt.

Eine Anordnung der genannten Art ist bereits vorgeschlagen worden, beispielsweise in DE-C-39 31 012. der Anmelderin.

Der Erfindung liegt die Aufgabe zugrunde, eine Anordnung der eingangs genannten Art so weiterzubilden, daß sie sich unter Beibehaltung eines einfachen und kostensparenden Aufbaues noch vielseitiger als bisher anwenden und an spezielle Einsatzfälle anpassen läßt.

Die gestellte Aufgabe wird mit dieser Anordnung erfindungsgemäß dadurch gelöst, daß der die Trennwandung durchstoßende Kanal Teil eines Schachteinsatzes ist, der in bekannter Weise eine durch einen unterhalb eines im Schachteinsatzbereich gebildeten Wasserspiegels angeordneten Düsenkörper begrenzte Gaskammer aufweist, in welche durch Erzeugen eines Unterdruckes oberhalb des Wasserspiegels ein Gas, insbesondere Frischluft, zugeleitet wird, und daß die Umwälzpumpe als Saugpumpe im Wasseransaugbereich des Schachtes am Schachteinsatz angeordnet ist und in einen unterhalb der Gaskammer beginnenden und sich bis über die Gaskammer hinauf erstreckenden Wasseraufnahmeraum fördert.

Bei der erfindungsgemäß ausgebildeten Anordnung sind die in DE-C-39 31 012.4 und in der älteren DE-A-36 25 488 vorgeschlagenen Anordnungen miteinander kombiniert mit dem Vorteil, daß die Reinigungsanordnung im leicht zugänglichen oberen Brunnenschachtbereich, praktisch unabhängig von der Lage des Grundwasserspiegels im Boden, unterbringbar ist und die Grundwasserreinigung sowohl durch eine Unterdruck-Gasbehandlung als auch durch eine Filterreinigung erfolgt. Es lassen sich mit der erfindungsgemäß ausgebildeten Anordnung somit nicht nur leichtflüchtige Verunreinigungen im Gaszustand entfernen, sondern auch im Grundwasser gelöst bleibende Verunreinigungen entfernen. Dabei ist für die Wartung der Filter die Unterbringung der Reinigungsanordnung im oberen Schachtbereich besonders vorteilhaft.

Der Schachteinsatz kann zweckmäßig einen nach oben offenen und nach unten mit mindestens einer Grundwasser-Einlaßöffnung versehenen Hohlzylinder aufweisen, innerhalb welchem die Gaskammer mit dem Düsenkörper und der Wasseraufnahmeraum angeordnet bzw. ausgebildet sind. In dem Hohlzylinder kann zusätzlich auch die Saugpumpe angeordnet sein, und der Schachteinsatz kann auch die zur Grundwasserreinigung eingesetzten Filter mindestens zum Teil tragen, so daß mit dem vorteilhafterweise im Schacht höhenverstellbar angeordneten Schachteinsatz alle wichtigen Teile zur Wartung und zur Auswechslung aus dem oberen Schachtende entnommen werden können. Die Filter können dabei axial unterhalb des Hohlzylinders des Schachteinsatzes oder aber radial außerhalb des Hohlzylinders des Schachteinsatzes auswechselbar angeordnet sein.

Die auswechselbaren Filter können vorteilhafterweise durch flexible Siebwandungen begrenzt sein, die durch mindestens ein spiralförmiges Versteifungselement gegeneinander abgestützt sind. Diese Ausbildung erlaubt die Verwendung einfacher Bauteile, wobei der Zwischenraum zwischen den flexiblen Siebwandungen mit einer beliebigen Filtermasse, beispielsweise Filtergranulat, in Anpassung an auszufilternde spezielle Verunreinigungen ausgefüllt werden kann. Die Filterwandungen können zweckmäßig aus flexiblen handelsüblichen Siebgeweben bestehen, die je nach Maschengröße für unterschiedliche Anwendungen einsetzbar sind. Die Filterkörper oder ihre Siebwandungen können konzentrisch zu mindestens einem Rohrkörper des Schachteinsatzes angeordnet sein und dadurch eine zusätzliche Abstützung oder Führung erhalten.

Wie bereits eingangs erwähnt worden ist, kann der Schachteinsatz, insbesondere der im Schachteinsatz vorgesehene Hohlzylinder, oberhalb des im Schacht sich bildenden Grundwasserspiegels angeordnet und über ein die Trennwandung durchstoßendes Rohr mit einem Wasseransaugbereich des Schachtes verbunden sein. Der Schachteinsatz kann aber auch bei hohem Grundwasserspiegel ganz innerhalb des Grundwasserbereiches angeordnet sein. Die Anordnung des höhenverstellbaren Schachteinsatzes kann aber auch so gewählt werden, daß der sich oberhalb der Trennwandung befindliche Wiedereinleitungsbereich des Schachtes von einem durchlässigen Schachtwandungsbereich begrenzt ist, der sich nach oben bis über den sich im Schacht bildenden Grundwasserspiegel in den dortigen wasserfreien Schachtbereich erstreckt, der unter Unterdruck steht. Damit kann mit dieser kombinierten Reinigungsanordnung gleichzeitig auch Gas aus dem sich oberhalb des Grundwasserspiegels befindlichen Erdbereich durch den wasserfreien oberen Schachtbereich hindurch nach außen zu einer dort befindlichen Gasfiltereinrichtung abgesaugt werden.

Die Anordnung gemäß der Erfindung kann bei sehr stark mit leichtflüchtigen Verunreinigungen verseuchtem Grundwasser auch so ausgestaltet sein, daß in dem Reinigungsbereich des Schachteinsatzes das Grundwasser nacheinander durch zwei Teilbereiche geführt wird und in jedem dieser beiden Teilbereiche von Luft oder einem anderen Gas durchströmt wird. Dabei läßt sich eine längere Verweildauer des Grundwassers und ein entsprechend erhöhter Austrag der leichtflüchtigen Verunreinigungen im Reinigigungsbereich erzielen.

Nachfolgend werden Ausführungsbeispiele einer erfindungsgemäß ausgebildeten kombinierten Grundwasser-Reinigungsanordnung anhand der beiliegenden Zeichnung näher erläutert.

Im einzelnen zeigen:
- Fig. 1: einen schematischen Längsschnitt durch ein erstes Ausführungsbeispiel der kombinierten Grundwasser-Reinigungsanordnung;
- Fig. 2: einen zentralen Längsschnitt durch ein zweites Ausführungsbeispiel der Anordnung;
- Fig. 3: einen schematischen Längsschnitt durch ein drittes Ausführungsbeispiel der Anordnung;
- Fig. 4: einen schematischen Längsschnitt durch eine Abwandlung des dritten Ausführungsbeispiels der Anordnung;
- Fig. 5: einen schematischen Längsschnitt durch ein viertes Ausführungsbeispiel der Anordnung.

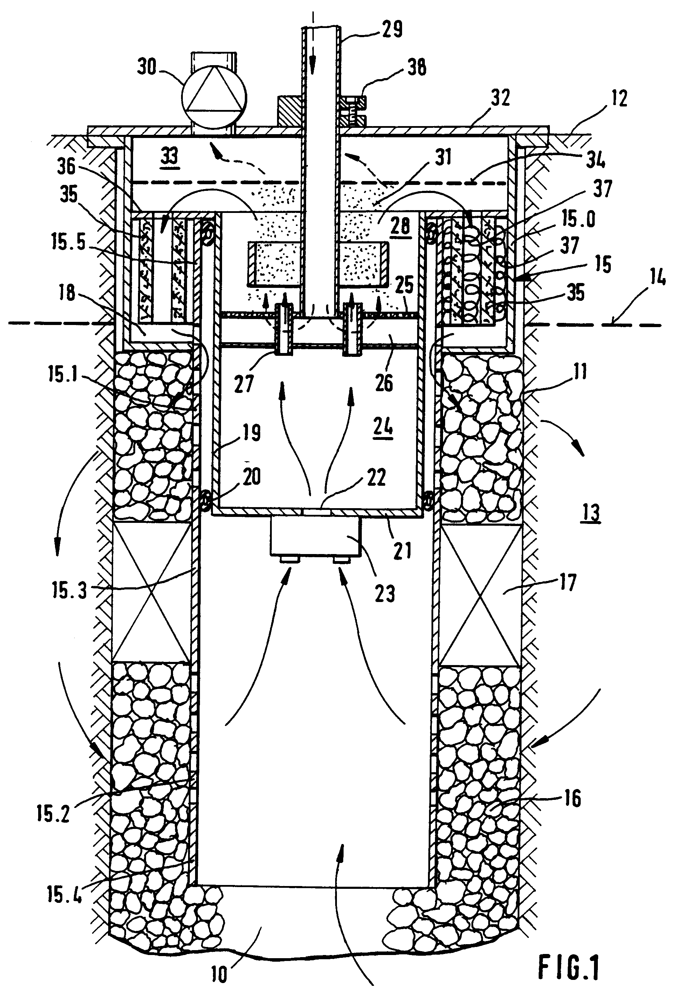

Fig. 1 zeigt einen Brunnenschacht 10 mit kreiszylindrischem Querschnitt und Schachtwandung 11, der von der Erdoberfläche 12 mittels eines Bohrwerkzeuges in bis zu einem Pegel 14 mit verschmutztem Grundwasser angefülltes Erdreich 13 eingebracht ist. In den Schacht 10 ist ein rohrförmiger Schachteinsatz 15 eingebracht, der in einem oberen Rohrabschnitt 15.0 den Schachtdurchmesser ganz ausfüllt und unterhalb davon auf einen kleineren Durchmesser verjüngt und in Rohrabschnitte 15.1 und 15.2 mit wasserdurchlässiger Wandung und in Rohrabschnitte 15.3 und 15.4 mit wasserundurchlässiger Wandung unterteilt ist. Der Zwischenraum zwischen den Rohrabschnitten 15.1 - 15.4 und der Schachtwandung 11 ist weitgehend mit Schotter 16 ausgefüllt; in dem Rohrbereich 15.3, der sich zwischen dem wasserdurchlässigen oberen Rohrbereich 15.1 und dem wasserdurchlässigen unteren Rohrbereich 15.2 befindet, jedoch mit einer Dichtnasse 17 ausgefüllt, die eine durchgehende Vertikalströmung von Wasser in dem mit Schotter gefüllten Schachtzwischenraum unterbindet. Ein zusätzlicher Rohrabschnitt 15.5 mit wasserundurchlässiger Wandung befindet sich innerhalb des Schachteinsatzes 15 und begrenzt dort nach innen eine ringförmige Filteraufnahmekammer 18.

In den Schachteinsatz 15 ist ein Hohlzylinder 19 eingesetzt und durch aufblasbare Dichtmanschetten 20 am Schachteinsatz gehalten und nach außen abgedichtet. Der Hohlzylinder 19 ist an seinem unteren Ende durch eine Wandung 21 verschlossen, die eine zentrale Durchgangsöffnung 22 aufweist, vor welcher eine elektrisch betriebene Saugpumpe 23 angeordnet ist. Die Wandung 21 begrenzt einen Wasseraufnahmeraum 24 im Hohlzylinder 19, der nach oben bis zu einer in Hohlzylinder 19 angeordneten, nach oben durch eine mit Düsenöffnungen versehene Wandung 25 abgeschlossenen Düsenkörper 26 reicht. Der Düsenkörper 26 ist von mehreren achsparallelen Durchlaßrohren 27 durchsetzt, die in einen Reinigungsbereich 28 des Schachteinsatzes 15 führen. In den Düsenkörper 26 führt von außen ein konzentrisch zum Hohlzylinder 19 angeordnetes Rohr 29, durch welches Luft in den Düsenkörper 26 nachgesaugt wird. Sie steigt unter der Saugwirkung eines Ventilators 30 durch die mit Düsenöffnungen versehene Wand 25 und den mit Wasser gefüllten Reinigungsbereich 28 des Schachteinsatzes 15 hindurch in durch Punkte angedeuteten Bläschen 31 nach oben und wird vom Ventilator 30 nach außen abgezogen. Durch den Ventilator 30 entsteht in dem durch einen Deckel 32 abgeschlossenen oberen Endbereich des Schachteinsatzes 15 ein Unterdruckraum 33, in welchem sich ein gegenüber dem Grundwasserspiegel 14 des Erdreiches 13 höher gelegener Wasserspiegel 34 des Schachteinsatzes 15 ausbildet. Die Pegelhöhe dieses Wasserspiegels 34 richtet sich nach der Förderstärke der Saugpumpe 23, zum Teil durch den im Unterdruckraum 33 herrschenden Druck und hängt auch noch vom Ablaufwiderstand des Wassers ab.

In der Zeichnung ist strömendes Grundwasser durch Pfeile mit ausgezogenen Pfeillinien und ist strömende Luft mit Pfeilen mit gestrichelten Pfeillinien angedeutet. Die Pfeile lassen erkennen, daß das durch den Wasseraufnahmeraum 24 bis in den Reinigungsbereich 28 des Schachteinsatzes 15 hochgeförderte und dort von den Luftbläschen 31 durchströmte Wasser über den Filteraufnahmeraum 18 in den zwischen den Rohrabschnitten 15.1, 15.5 des Schachteinsatzes 15 und dem Hohlzylinder 19 bestehenden Zwischenraum 39 abströmen und durch den wasserdurchlässigen Rohrbereich 15.1 und die angrenzende Kiesfüllung im Schacht 10 hindurch in das Erdreich 13 zurückströmen kann. Der Wasseransaugbereich ist durch die untere Rohröffnung und den wasserdurchlässigen Rohrabschnitt 15.2 begrenzt. Die Dichtmasse 17 im Schacht 10 sorgt dafür, daß nur Grundwasser aus dem Erdreich in den Wasseransaugbereich des Schachteinsatzes 15 einströmen kann.

Der ringförmige Filteraufnahmeraum 18 ist im dargestellten Ausführungsbeispiel mit Doppelmantelfiltern 35 ausgefüllt, die an einer lose eingesetzten und mit Einströmöffnungen versehenen Deckwandung 36 hängen. Der Filteraufnahmeraum 18 kann mit mehreren und dicht aneinandergrenzenden Doppelmantelfilterkörpern ausgefüllt sein, deren durch Kreuze gekennzeichnete Filterwandungen beispielsweise mittels spiralförmiger Versteifungselemente 37 gegeneinander oder gegen die Wandung des Filteraufnahmeraumes 18 abgestützt sein können (rechte Seite der Fig. 1).

Der über die aufblasbaren Dichtmanschetten 20 gegenüber dem Schachteinsatz 15 abdichtbare Hohlzylinder 19 mit dem Düsenkörper 26 und der Saugpumpe 23 ist fest mit dem die Luftzufuhr in den Düsenkörper 26 bewirkenden Rohr 29 verbunden, das durch eine zentrale Öffnung im Schachtdeckel 32 nach außen ragt. An diesem Rohr 29 läßt sich der Hohlzylinder 19 im Innern des Schachteinsatzes 15 in eine gewünschte Höhenlage verschieben und anschließend mittels eines am Schachtdeckel 32 anliegenden und am Rohr 29 verspannbaren Klemmrings 38 in dieser Höhenlage halten.

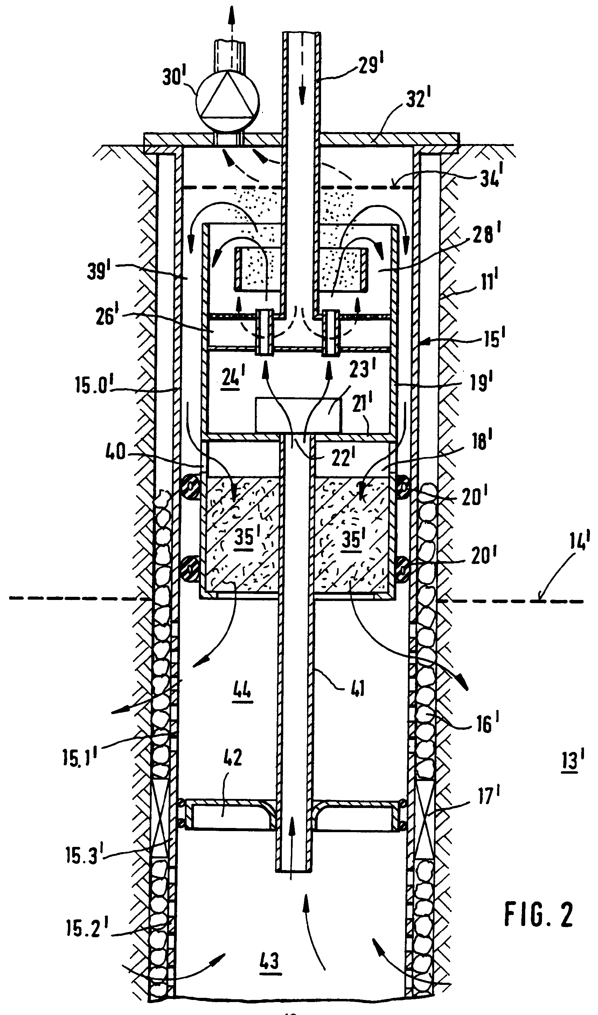

Bei dem in Fig. 2 dargestellten Ausführungsbeispiel sind dem Ausführungsbeispiel nach Fig. 1 entsprechende Teile der Anordnung mit der gleichen Bezugsziffer, ergänzt durch einen Indexstrich, bezeichnet. Es unterscheidet sich von der Ausführungsform nach Fig. 1 im wesentlichen dadurch, daß der Filteraufnahmeraum 18′ nicht radial außerhalb, sondern axial unterhalb des Hohlzylinders 19′ des Schachteinsatzes 15′ ausgebildet ist. Der Schachteinsatz 15′ weist einen Rohrkörper mit gleichem Durchmesser über seine ganze Länge auf, der wiederum in einen wasserundurchlässigen oberen Rohrabschnitt 15.0′, einen anschließenden wasserdurchlässigen Rohrbereich 15.1′, einen wasserundurchlässigen Rohrabschnitt 15.3′ und einen zweiten wasserdurchlässigen Rohrabschnitt 15.2′ gegliedert ist. Der Zwischenraum zwischen der Schachtwandung 11′ und dem rohrförmigen Schachteinsatz 15′ ist mit einer Kiesfüllung 16′ versehen, die jedoch auf der Höhe des Rohrabschnittes 15.3′ durch eine Dichtmanschette 17′ ersetzt ist.

Der Reinigungsbereich 28′ des Schachteinsatzes 15′ ist gleich ausgebildet wie beim Ausführungsbeispiel nach Fig. 1. In dem Filteraufnahmeraum 18′, der sich an die Wandung 21′ des Hohlzylinders 19′ nach unten anschließt, ist eine Filterpackung 35′ angeordnet. Das Wasser gelangt aus dem Reinigungsbereich 28′ durch den zwischen dem Hohlzylinder 19′ und dem Rohrabschnitt 15.0′ befindlichen Zwischenraum 39′ nach unten und durch Wandungsöffnungen 40 in das Innere des Filteraufnahmeraumes 18′. Durch den Filteraufnahmeraum 18′ hindurch führt von der zentralen Wassereinlaßöffnung 22′ der Wandung 21′ ein Wasseransaugrohr 41 nach unten bis in den Bereich des Rohrabschnittes 15.2′. Auf der Höhe des wasserundurchlässigen Rohrabschnittes 15.3′ ist im Schachteinsats 15′ eine Trennwandung 42 ausgebildet, die von dem Wasseransaugrohr 41 durchstoßen ist. Die Trennwandung 42 unterteilt den Schacht in einen unteren Wasseransaugbereich 43 und einen oberen Wasserablaufbereich 44. In den Wasserablaufbereich gelangt das gereinigte Grundwasser nach Durchlaufen der Filter 35′ und strömt dann durch den wasserdurchlässigen Rohrabschnitt 15.1′ nach außen zurück in das Erdreich 13′. Das verunreinigte Grundwasser gelangt durch den wasserdurchlässigen Rohrabschnitt 15.2′ in den Wasseransaugbereich 43 und wird von dort mittels der in dem Wasseraufnahmeraum 24′ angeordneten Saugpumpe 23′ durch das Wasseransaugrohr 41 hindurch nach oben gefördert.

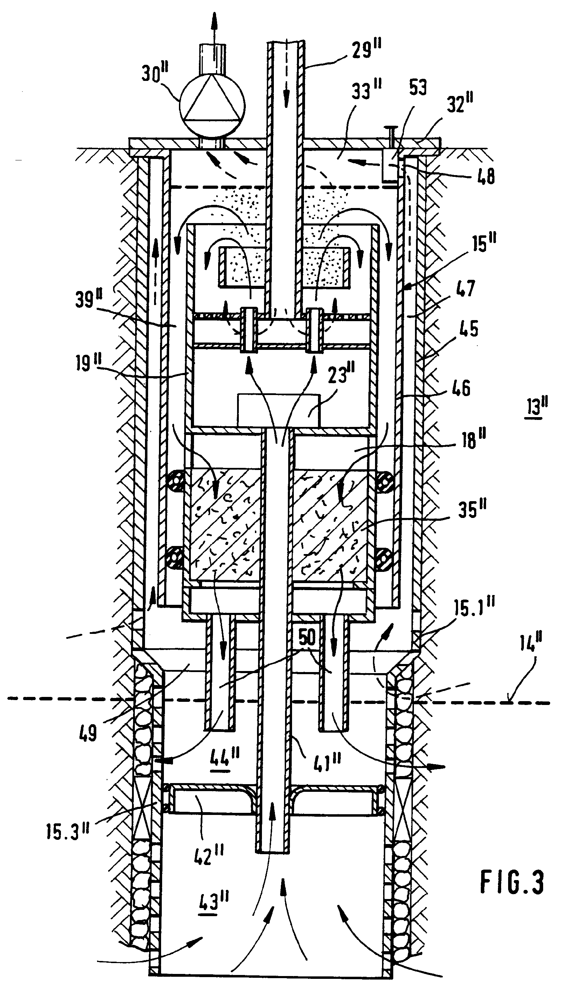

Bei dem Ausführungsbeispiel nach Fig. 3 sind dem Ausführungsbeispiel nach Fig. 1 entsprechende Teile mit den gleichen Bezugsziffern, ergänzt durch einen Doppelindexstrich, bezeichnet. Die Strömung des Grundwassers in der Anordnung ist wieder mit Pfeilen mit ausgezogenen Pfeillinien, und die Strömung von Luft und Gasen in der Anordnung ist durch Pfeile mit gestrichelten Pfeillinien angedeutet. Das Ausführungsbeispiel ähnelt in der Anordnung des Filteraufnahmeraumes 18˝ und der Filter 35˝ demjenigen nach Fig. 2, weist aber gegenüber den Ausführungsbeispielen nach den Fig. 1 und 2 die Besonderheit auf, daß die Anordnung gemäß ihrer Ausbildung neben der Reinigung des Grundwassers auch eine Bodenluftabsaugung aus dem Bodenbereich 13˝, der sich oberhalb des Grundwasserspiegels 14˝ befindet, erlaubt. Hierzu ist der Schacht in seinem oberen Bereich mit einem äußeren Schachtrohr 45 ausgekleidet, innerhalb welchem der Schachteinsatz 15˝ mit einem mit Abstand angeordneten Rohrmantel 46 beginnt. Der zwischen dem äußeren Schachtrohr 45 und dem Rohrmantel 46 befindliche Ringspalt 47 ist oben durch Öffnungen 48 im Rohrmantel 46 mit dem Unterdruckraum 33˝ verbunden und reicht nach unten bis in einen oberhalb des Grundwasserspiegels 14˝ befindlichen Gassammelraum 49, der auf der Höhe eines gas- und wasserdurchlässigen Rohrwandungsbereiches 15.1˝ ausgebildet ist. Der Rohrwandungsbereich 15.1˝ reicht bis unterhalb des Grundwasserspiegels 14˝, wo am anschließenden Rohrabschnitt 15.3˝ eine Trennwandung 42˝ ausgebildet ist, die von dem Wasseransaugrohr 41˝ durchstoßen ist und welche im Schacht den unteren Wasseransaugbereich 43˝ von dem darüber befindlichen Wasserablaufbereich 44˝ trennt.

Aus dem Filteraufnahmeraum 18˝ strömt das Wasser durch Fallrohre 50 ab in den Wasserablaufbereich 44˝. Im oberen Teil des Schachteinsatzes 15˝ erfolgt der Wasserablauf wie beim Ausführungsbeispiel nach Fig. 2 durch einen Zwischenraum 39˝ hindurch, der zwischen der Rohrwandung 46 und dem Hohlzylinder 19˝ des Schachteinsatzes ausgebildet ist.

Auch hier läßt sich der Hohlzylinder 19˝ mit den Filtern, den Fallrohren 50 und dem Wasseransaugrohr 41˝ bei geöffnetem Schachtdeckel 32˝ am Luftzuleitungsrohr 29˝ aus dem Schacht entfernen oder auf die richtige Höhenlage im Schacht einstellen. In der dargestellten richtigen Höhenlage können im durchlässigen Rohrwandungsbereich 15.1˝ Luft und andere Gase aus dem Bodenbereich in den Gassammelraum 49 einfließen, wo der von dem Ventilator 30˝ bewirkte Unterdruck wirksam ist. Dadurch strömt die Luft durch den Ringspalt 47 und Öffnungen 48 nach oben in den Unterdruckraum 33˝ und wird vom Ventilator 30˝ nach außen abgesaugt. Dort kann eine äußere, nicht dargestellte Luftfiltereinrichtung angeordnet sein. Mittels einer von außen verstellbaren Drossel 53 läßt sich der im Zwischenraum 47 wirksame Unterdruck verändern oder der Zwischenraum 47 auch ganz absperren.

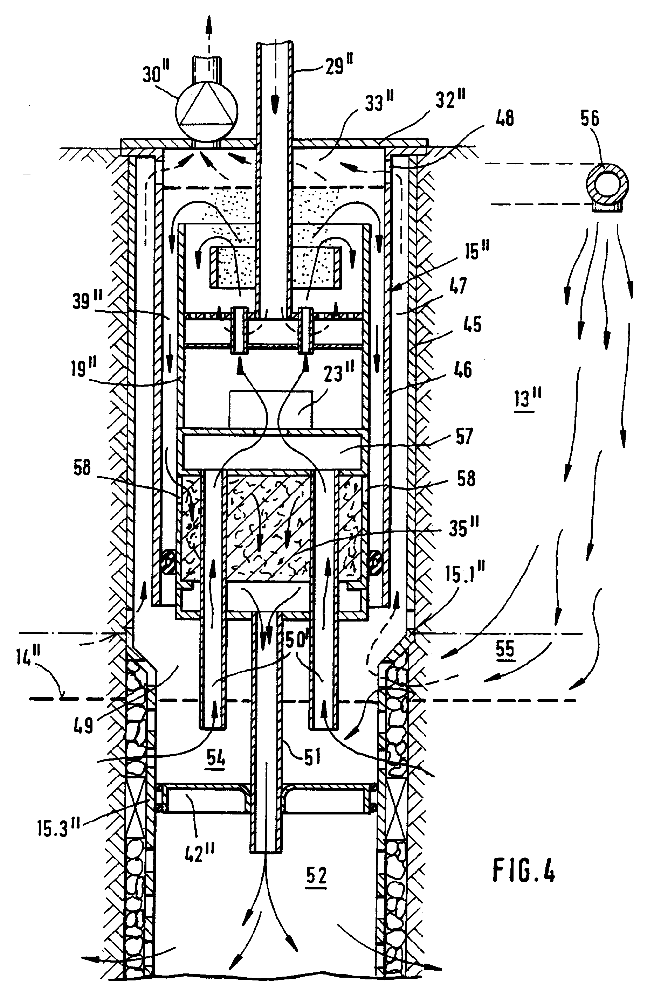

Fig. 4 zeigt eine Abwandlung der Anordnung nach Fig. 3. Sie ist vorzugsweise in Verbindung mit einer Frischwasserzufuhr in das Erdreich vorgesehen. Durch die Frischwasserzufuhr, hier aus einer mit Abstand um den Schacht herum verlegten Ringleitung 56, sollen aus dem oberhalb des Grundwasserspiegels 14˝ befindlichen Kapillarwasserbereich 55 Verunreinigungen ausgeflößt werden, ohne daß dabei die Verunreinigungen in den unterhalb befindlichen Grundwasserbereich abgedrängt werden. Hierzu reicht wiederum der obere durchlässige Rohrwandungsbereich 15.1˝ bis über den Grundwasserspiegel 14˝ in den Kapillarwasserbereich 55. Der wasserdurchlässige Rohrwandungsbereich 15.1˝ begrenzt hier aber einen oberhalb der Trennwandung 42˝ ausgebildeten Wasseransaugbereich 54 des Schachtes. Dementsprechend ist der untere Teil des Hohlzylinders 19˝ des Rohreinsatzes 15˝ gegenüber der Ausführungsform nach Fig. 3 abgewandelt. Ein die Trennwandung 42˝ durchstoßendes Rohr 51 ist ein Wasserrücklaufrohr, das aus dem ein Filter 35˝ enthaltenden unteren Hohlkörperbereich in einen Wasserwiedereinleitungsbereich 52 des Schachtes führt. Aus dem Wasseransaugbereich 54 führen Rohre 50′ durch das Filter 35˝ hindurch nach oben in einen gegenüber dem Filterraum abgedichteten Ansaugraum 57 für die Saugpumpe 23˝. Das aus dem oberen Reinigungsbereich des Schachteinsatzes 15˝ durch den Zwischenraum 34˝ nach unten zurückfließende Wasser gelangt durch mehrere Öffnungen 58 der Wandung des Hohlzylinders 19˝ in den Filterraum und läuft durch das Filter 35˝ hindurch zum Wasserrücklaufrohr 51.

Es bleibt hier bei einer gleichbleibenden Kapillarwasseraufhöhung im Kapillarwasserbereich 55 durch den Frischwasserzufluß aus der Ringleitung 56, und die aus dem Kapillarwasserbereich 55 ausgeflößten Verunreinigungen werden auf der Höhe dieses Bereiches in den Schacht eingesaugt.

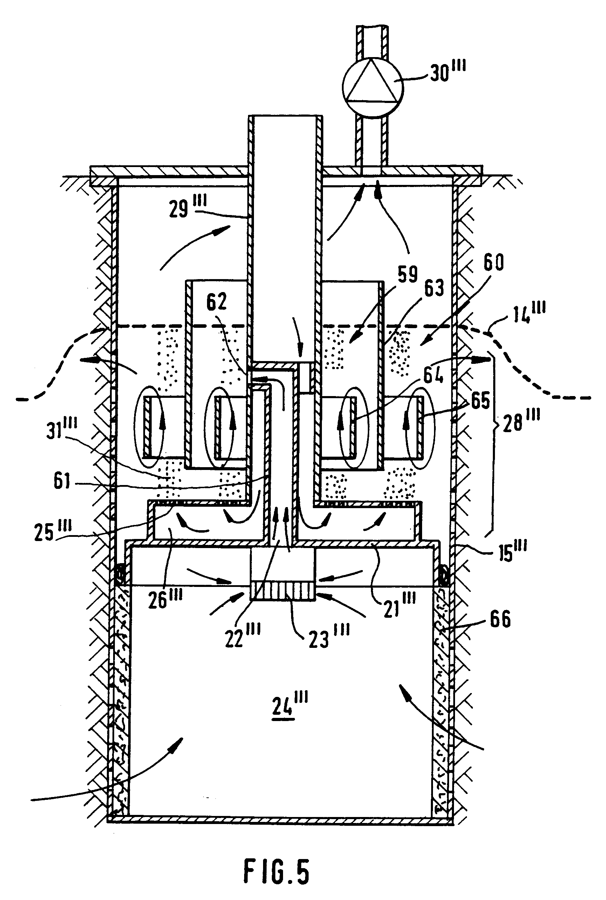

Fig. 5 zeigt eine Ausführungsform der kombinierten Grundwasser-Reinigungsanordnung, bei welcher im Reinigungsbereich 28˝ der Anordnung das Grundwasser nacheinander in zwei Teilbereichen 59 und 60 den aufsteigenden Luft- oder Gasbläschen ausgesetzt wird. Diese Ausführungsform ist besonders vorteilhaft bei sehr stark verschmutztem Grundwasser. In dem wasserdurchlässige Wandungsbereiche aufweisenden Schachteinsatz 15‴ ist der Düsenkörper 26‴ auf der den Wasseraufnahmeraum des Schachteinsatzes unterteilenden Querwandung 21‴ angeordnet. Die zentrale Durchgangsöffnung 22‴ der Wandung 21‴, vor welcher die Saugpumpe 23‴ angeordnet ist, führt in eine zentrale Rohrleitung 61, die ein Stück weit konzentrisch in dem Rohr 29‴ verläuft und in einer seitlichen Öffnung 62 des Rohres 29‴ endet. Oberhalb des Düsenkörpers 26‴ sind mit Abstand von seiner Düsenwandung 25‴ und in gegenseitigem Abstand und mit Abstand von dem Rohr 29‴ eine die beiden Teilbereiche 59 und 60 voneinander trennende Rohrwandung und dazu konzentrisch ein innerer Leitring 64 und ein äußerer Leitring 65 angeordnet. Die Rohrwandung 63 reicht bis über den sich im Schachteinsatz 15‴ ausbildenden Grundwasserspiegel 14‴ hinaus. Die Seitenöffnung 62 mündet in den ersten Teilbereich 59. Das mittels der Saugpumpe 23‴ aus dem unteren, seitlich durch einen Filterbelag 66 begrenzten Wasseraufnahmeraum 24‴ hochgeförderte Grundwasser gelangt also in den ersten Teilbereich 59 des Reinigungsbereiches 28‴, wo sich um den Leitring 64 herum eine Grundwasser-Umlaufströmung unter dem Einfluß der durch den Teilbereich 59 aufsteigenden Luftbläschen 31‴ ausbilden kann. Das Grundwasser gelangt anschließend durch den zwischen der Düsenwandung 25‴ und der Rohrwandung 63 bestehenden Zwischenraum in den zweiten und äußeren Teilbereich 60 des Reinigungsbereiches 28‴, wo sich unter dem Einfluß der aufsteigenden Luftbläschen 31‴ ebenfalls eine Ringströmung um den Leitring 65 herum ausbilden kann. Schließlich gelangt das Grundwasser aus dem Reinigungsbereich 28‴ durch einen gelochten Bereich der Außenwandung des Schachteinsatzes 15‴ wieder nach außen.

Wie in Fig. 5 angedeutet ist, sind in der Düsenwandung 25‴ die Düsenöffnungen ungleichmäßig und so verteilt angeordnet, daß in bezug auf die beiden Leitringe 64 und 65 die Gasbläschen 31‴ jeweils nur auf einer Seite dieser Leitringe aufsteigen. Dadurch wird die angestrebte Ringströmung des Grundwassers in den beiden Teilbereichen 59 und 60 um die Leitringe 64 und 65 herum begünstigt.

## Patentansprüche

1. Anordnung zum Reinigen von verschmutztem Grundwasser und dem von ihm durchströmten Erdreich (13), mit einem bis in den Bereich des zu reinigenden Grundwassers getriebenen Schacht (10) mit durch eine unterhalb des Grundwasserspiegels (14) des Schachtes befindliche Trennwandung (21, 42) gegeneinander abgedichteten Brunnenschachtbereichen mit wasserdurchlässiger Schachtwandung (15.1, 15.2) zum Wasseransaugen aus dem Erdreich (13) und zur Wiedereinleitung des Wassers in das Erdreich, und mit einen die Trennwandung durchstoßenden Kanal (22, 41) als Teil eines Strömungsweges, der über eine Wasserumwälzpumpe (23) und Filter (35) führt,
dadurch gekennzeichnet, daß der die Trennwandung durchstoßende Kanal (41) Teil eines Schachteinsatzes (15) ist, der in bekannter Weise eine durch einen unterhalb eines im Schachteinsatzbereich gebildeten Wasserspiegels (34) angeordnete Düsenwandung (25) begrenzte Gaskammer (26) aufweist, in welche durch Erzeugen eines Unterdruckes oberhalb des Wasserspiegels (34) ein Gas, insbesondere Frischluft, zugeleitet wird, und daß die Umwälzpumpe (23) als Saugpumpe im Wasseransaugbereich des Schachtes am Schachteinsatz (15) angeordnet ist und in einen unterhalb der Gaskammer (26) beginnenden und sich über die Gaskammer hinauf erstreckenden Wasseraufnahmeraum (24) fördert.

2. Anordnung nach Anspruch 1, dadurch gekennzeichnet, daß der Schachteinsatz (15) einen nach oben offenen und nach unten mindestens eine Grundwasser-Einlaßöffnung (22) aufweisenden Hohlzylinder (19) aufweist, innerhalb welchem die Gaskammer (26) mit der Düsenwandung (25) angeordnet und der Wasseraufnahmeraum (24) ausgebildet sind.

3. Anordnung nach Anspruch 1 oder 2, dadurch gekennzeichnet, daß in dem Hohlzylinder (19′, 19˝) zusätzlich die Saugpumpe (23′, 23˝) angeordnet ist.

4. Anordnung nach einem der Ansprüche 1 bis 3, dadurch gekennzeichnet, daß der Schachteinsatz (15) im Schacht (10) höhenverstellbar angeordnet ist.

5. Anordnung nach einem der Ansprüche 1 bis 4, dadurch gekennzeichnet, daß der Schachteinsatz (15) mindestens teilweise die Filter (35) zur Grundwasserreinigung trägt.

6. Anordnung nach Anspruch 5, dadurch gekennzeichnet, daß die Filter (35′, 35˝) axial unterhalb des Hohlzylinders (19′, 19˝) des Schachteinsatzes auswechselbar angeordnet sind.

7. Anordnung nach Anspruch 5, dadurch gekennzeichnet, daß die Filter (35) radial außerhalb des Hohlzylinders (19) des Schachteinsatzes (15) auswechselbar angeordnet sind.

8. Anordnung nach einem der Ansprüche 5 bis 7, dadurch gekennzeichnet, daß die auswechselbaren Filter (35) durch flexible Siebwandungen begrenzt sind, die durch mindestens ein spiralförmiges Versteifungselement (37) gegeneinander abgestützt sind.

9. Anordnung nach einem der Ansprüche 5 bis 8, dadurch gekennzeichnet, daß die Filterkörper (35) oder ihre Siebwandungen konzentrisch zu mindestens einem Rohrkörper (15.5, 41) des Schachteinsatzes (15, 15′) angeordnet sind.

10. Anordnung nach einem der Ansprüche 2 bis 9, dadurch gekennzeichnet, daß der Hohlzylinder (19˝) des Schachteinsatzes (15˝) oberhalb des im Schacht sich bildenden Grundwasserspiegels (14˝) angeordnet ist und über ein die Trennwandung (42˝) durchstoßendes Rohr (41˝) mit einem Wasseransaugbereich (43˝) des Schachtes verbunden ist.

11. Anordnung nach Anspruch 10, dadurch gekennzeichnet, daß der oberhalb der Trennwandung (42˝) befindliche Wiedereinleitungsbereich (44˝) des Schachtes von einem durchlässigen Schachtwandungsbereich (15.1˝) begrenzt ist, der sich nach oben bis über den sich im Schacht bildenden Grundwasserspiegel (14˝) in den dortigen wasserfreien Schachtbereich (49) erstreckt, der unter Unterdruck steht.

12. Anordnung nach einem der Ansprüche 2 bis 10, dadurch gekennzeichnet, daß der Hohlzylinder (19˝) des Schachteinsatzes (15˝) oberhalb des im Schacht sich bildenden Grundwasserspiegels (14˝) angeordnet ist und über ein die Trennwandung (42˝) durchstoßendes Rohr (51) mit einem Wasserwiedereinleitungsbereich (52) des Schachtes verbunden ist. (Fig. 4)

13. Anordnung nach Anspruch 11, dadurch gekennzeichnet, daß der wasserfreie Schachtbereich (49) über mindestens eine Öffnung (48) mit veränderlichem Durchlaßquerschnitt (Drossel 53) mit dem Unterdruckraum (33˝) des Schachteinsatzes (15˝) in Verbindung steht.

14. Anordnung nach einem der Ansprüche 1 bis 13, dadurch gekennzeichnet, daß ein oberer wasserdurchlässiger Rohrbereich (15.1˝), der einen Wasseransaugbereich (54) des Schachtes begrenzt, bis über den Grundwasserspiegel (14˝) und in einen Kapillarwasserbereich (55) ragt, in welchen von oben Frischwasser eingeleitet wird.

15. Anordnung nach einem der Ansprüche 1 bis 14, dadurch gekennzeichnet, daß der Reinigungsbereich (28‴) in zwei jeweils von aus dem Düsenkörper (26‴) austretenden Gas durchströmte Teilbereiche (59, 60) unterteilt ist, die von dem geförderten Grundwasser nacheinander durchströmt werden.

16. Anordnung nach Anspruch 15, dadurch gekennzeichnet, daß die beiden Teilbereiche (59, 60) durch einen unten und oben offenen Rohrkörper (63) voneinander getrennt sind, zwischen dessen unterem Ende und der Düsenwandung (25‴) des Düsenkörpers (26‴) ein Abstand besteht, der einen Verbindungsweg zwischen dem radial inneren ersten Teilbereich (59) und dem radial äußeren zweiten Teilbereich (60) bildet.

17. Anordnung nach Anspruch 15 oder 16, dadurch gekennzeichnet, daß eine zentrale Rohrleitung (61) des Wasserströmungsweges im oberen Teil des ersten Teilbereiches (59) des Reinigungsbereiches (28‴) endet.

18. Anordnung nach einem der Ansprüche 15 bis 17, dadurch gekennzeichnet, daß in jedem der beiden Teilbereiche (59, 60) des Reinigungsbereiches (28‴) koaxial und mit Abstand von anderen Wandungen des Schachteinsatzes (15‴) verlaufende Leitringe (64, 65) angeordnet sind.

19. Anordnung nach Anspruch 18, dadurch gekennzeichnet, daß die Düsenöffnungen in der Düsenwandung (25‴) ungleichmäßig und so verteilt angeordnet sind, daß jeweils nur auf einer Seite der Leitringe (64, 65) Gasbläschen (31‴) in die beiden Teilbereiche (59, 60) aufsteigen.

## Claims

1. Arrangement for cleansing polluted groundwater and the soil (13) it flows through, comprising a shaft (10), which is driven into the area of the groundwater to be cleansed, having wellshaft sections, which are sealed from each other by a separating wall (21, 42) below the groundwater level (14) of the shaft and with a water-permeable shaft wall (15.1, 15.2) for vacuuming water from the soil (13) and for re-introduction of the water into the soil, and having a channel (22, 41) which passes through the separating wall as part of a flowpath which connects to a water-circulating pump (23) and filter (35), **characterised in that** the channel (41) which passes through the separating wall is part of a shaft insert (15), which comprises in a conventional manner a gas chamber (26), which is defined by a nozzle wall (25) arranged below the water level (34) which has been established in the shaft-insert area, into which a gas, in particular fresh air, is introduced by producing a negative pressure above water level (34), and that the circulating pump (23) is arranged as a vacuum pump in the water-vacuuming area of the shaft at the shaft insert (15) and pumps into a water receptacle (24) which starts below the gas chamber (26) and extends beyond the gas chamber.

2. Arrangement according to claim 1, **characterised** **in that** the shaft insert (15) comprises a hollow cylinder (19), which is open towards the top and has at least one groundwater inlet opening (22) towards the bottom, and which includes the gas chamber (26) with nozzle wall (25) and in which the water receptacle (24) is formed.

3. Arrangement according to claim 1 or 2, **characte****rised in that** the hollow cylinder (19′, 19˝) additionally houses a vacuum pump (23′, 23˝).

4. Arrangement according to one of claims 1 to 3, **characterised in that** the shaft insert (15) is height-adjustable in the shaft (10).

5. Arrangement according to one of claims 1 to 4, **characterised in that** the shaft insert (15) at least partially holds the filters (35) for groundwater cleansing.

6. Arrangement according to claim 5, characterised in that the filters (35′, 35˝) are axially and exchangeably arranged below the hollow cylinder (19′, 19˝) of the shaft insert.

7. Arrangement according to claim 5, **characterised** in that the filters (35) are radially and exchangeably arranged outside the hollow cylinder (19) of the shaft insert (15).

8. Arrangement according to one of claims 5 to 7, **characterised in that** the exchangeable filters (35) are defined by flexible sieve walls which are supported against each other by at least one spiral-shaped reinforcing element (37).

9. Arrangement according to one of claims 5 to 8, **characterised in that** the filter elements (35) or their sieve walls are arranged concentrally to at least one pipe element (15.5, 41) of the shaft insert (15, 15′).

10. Arrangement according to one of claims 2 to 9, **characterised in that** the hollow cylinder (19˝) of the shaft insert (15˝) is arranged above the groundwater level (14˝) which establishes itself in the shaft and connected to a water-vacuuming area (43˝) of the shaft via a pipe (41˝) which passes through the separating wall (42˝).

11. Arrangement according to claim 10, **characterised** **in that** the re-introduction area (44˝) of the shaft, which is located above the separating wall (42˝), is defined by a permeable shaft-wall area (15.1˝), which extends upwards beyond the groundwater level (14˝) which establishes itself in the shaft into the water-free shaft area (49) thereat, which is under negative pressure.

12. Arrangement according to one of claims 2 to 10, **characterised in that** the hollow cylinder (19˝) of the shaft insert (15˝) is arranged above the groundwater lever (14˝) which establishes itself in the shaft and connected to a water re-introduction area (52) of the shaft via a pipe (51) which passes through the separating wall (42˝) (Fig. 4).

13. Arrangement according to claim 11, **characterised** **in that** the waterfree shaft area (49) is connected to the negative-pressure area (33˝) of the shaft insert (15˝) via at least one opening (48) of variable passage cross-section (throttle 53).

14. Arrangement according to one of claims 1 to 13, **characterised in that** an upper water-permeable pipe area (15.1˝), which defines a water-vacuuming area (54) of the shaft, extends to above groundwater level (14˝) and into a capillary water area (55) into which fresh water is introduced from the top.

15. Arrangement according to one of claims 1 to 14, **characterised in that** the cleansing area (28‴) is divided into two sections (59, 60) which are flowed through by gas exiting from the nozzle body (26‴) and which are one after the other flowed through by pumped groundwater.

16. Arrangement according to claim 15, **characterised** **in that** the two sections (59, 60) are separated from each other by an upwardly and downwardly open tubular element (63), having a gap between its bottom end and the nozzle wall (25‴) of the nozzle element (26‴) which establishes a connecting path between the radially inner first section (59) and the radially outer second section (60).

17. Arrangement according to claim 15 or 16, **charac****terised in that** a central pipeline (61) of the water-flowpath terminates in the upper portion of the first section (49) of the cleansing area (28‴).

18. Arrangement according to one of claims 15 to 17, **characterised in that** in each of the two sections (59, 60) of the cleansing area (28‴) are arranged guide rings (64, 65) which extend coaxially and at a distance from other walls of the shaft insert (15‴).

19. Arrangement according to claim 18, **characterised** **in that** the nozzle openings in the nozzle wall (25‴) are irregularly arranged in such a manner that gas bubbles (31‴) rise into both sections (59, 60) on only one side of the guide rings (64, 65).

## Revendications

1. Dispositif pour purifier des eaux souterraines polluées et la terre (13) parcourue par celles-ci avec un puits (10) entraîné jusque dans la zone des eaux souterraines à purifier avec des zones de puits avec paroi de puits perméable à l'eau (15.1, 15.2) rendues étanches les unes par rapport aux autres par une paroi de séparation (21, 42) se trouvant au-dessous du niveau d'eaux souterraines (14) du puits pour l'aspiration d'eau hors de la terre (13) et pour la réintroduction de l'eau dans la terre, et avec un canal (22, 41) traversant la paroi de séparation comme partie d'un chemin d'écoulement, qui conduit par l'intermédiaire d'une pompe de circulation d'eau (23) et d'un filtre (35),
caractérisé en ce que le canal (41) traversant la paroi de séparation fait partie d'un insert de puits (15) qui présente de manière connue une chambre de gaz (26) délimitée par une paroi à buses (25) disposée au-dessous d'un niveau d'eau (34) formé dans la zone d'insert de puits, dans laquelle un gaz, en particulier de l'air frais, est conduit par génération d'une dépression au-dessus du niveau d'eau (34), et en ce que la pompe de circulation (23) est disposée comme pompe d'aspiration dans la zone d'aspiration d'eau du puits sur l'insert de puits (15) et transporte dans un espace de réception d'eau (24) commençant au-dessous de la chambre de gaz (26) et s'étendant vers le haut au-dessus de la chambre de gaz.

2. Dispositif selon la revendication 1, caractérisé en ce que l'insert de puits (15) présente un cylindre creux (19) ouvert vers le haut et présentant vers le bas au moins une ouverture (22) d'entrée des eaux souterraines, à l'intérieur duquel la chambre de gaz (26) disposée avec la paroi à buses (25) et l'espace de réception d'eau (24) sont formés.

3. Dispositif selon la revendication 1 ou 2, caractérisé en ce que dans le cylindre creux (19′, 19˝) est disposée en outre la pompe d'aspiration (23′, 23˝).

4. Dispositif selon l'une des revendications 1 à 3, caractérisé en ce que l'insert de puits (15) est disposé réglable en hauteur dans le puits (10).

5. Dispositif selon l'une des revendications 1 à 4, caractérisé en ce que l'insert de puits (15) porte au moins partiellement les filtres (35) pour le nettoyage des eaux souterraines.

6. Dispositif selon la revendication 5, caractérisé en ce que les filtres (35′, 35˝) sont disposés amovibles axialement au-dessous du cylindre creux (19′, 19˝) de l'insert de puits.

7. Dispositif selon la revendication 5, caractérisé en ce que les filtres (35) sont disposés amovibles radialement à l'extérieur du cylindre creux (19) de l'insert de puits (15).

8. Dispositif selon l'une des revendications 5 à 7, caractérisé en ce que les filtres amovibles (35) sont délimités par des parois perforées flexibles, qui sont soutenues les unes contre les autres par au moins un élément de renforcement (37) en forme de spirale.

9. Dispositif selon l'une des revendications 5 à 8, caractérisé en ce que les corps de filtre (35) ou leurs parois perforées sont disposés concentriquement à au moins un corps de tube (15.5, 41) de l'insert de puits (15, 15′).

10. Dispositif selon l'une des revendications 2 à 9, caractérisé en ce que le cylindre creux (19˝) de l'insert de puits (15˝) est disposé au-dessus du niveau d'eaux souterraines (14˝) se formant dans le puits et est relié à une zone d'aspiration d'eau (43˝) du puits par l'intermédiaire d'un tube (41˝) traversant la paroi de séparation (42˝).

11. Dispositif selon la revendication 10, caractérisé en ce que la zone de réintroduction (44˝) du puits se trouvant au-dessus de la paroi de séparation (42˝) est délimitée par une zone de paroi de puits (15.1˝) perméable, qui s'étend vers le haut jusqu'au-dessus du niveau d'eaux souterraines (14˝) formant dans le puits dans la zone de puits (49) exempte d'eau à cet endroit, qui est en dépression.

12. Dispositif selon l'une des revendications 2 à 10, caractérisé en ce que le cylindre creux (19˝) de l'insert de puits (15˝) est disposé au-dessus du niveau d'eaux souterraines (14˝) se formant dans le puits et est relié à une zone de réintroduction d'eau (52) du puits par l'intermédiaire d'un tube (51) traversant la paroi de séparation (42˝). (Fig. 4)

13. Dispositif selon la revendication 11, caractérisé en ce que la zone de puits exempte d'eau (49) est en relation avec l'espace en dépression (33˝) de l'insert de puits (15˝) par l'intermédiaire d'au moins une ouverture (48) avec section de passage modifiable (étranglement 53).

14. Dispositif selon l'une des revendications 1 à 13, caractérisé en ce qu'une zone de tube perméable à l'eau supérieure (15.1˝) qui délimite une zone d'aspiration d'eau (54) du puits, dépasse jusqu'au-dessus du niveau d'eaux souterraines (14˝) et dans une zone d'eau capillaire (55), dans laquelle de l'eau fraîche est introduite depuis le haut.

15. Dispositif selon l'une des revendications 1 à 14, caractérisé en ce que la zone de purification (28‴) est subdivisée en deux zones partielles (59, 60) parcourues chacune par du gaz sortant du corps à buses (26‴), qui sont parcourues l'une après l'autre par les eaux souterraines transportées.

16. Dispositif selon la revendication 15, caractérisé en ce que les deux zones partielles (59, 60) sont séparées l'une de l'autre par un corps de tube (63) ouvert en bas et en haut, entre l'extrémité inférieure duquel et la paroi à buses (25‴) du corps à buses (26‴) il y a une distance qui forme un chemin de liaison entre la première zone partielle radiale intérieure (59) et la deuxième zone partielle radiale extérieure (60).

17. Dispositif selon la revendication 15 ou 16, caractérisé en ce qu'une conduite centrale (61) du chemin d'écoulement d'eau se termine dans la partie supérieure de la première zone partielle (59) de la zone de purification (28‴).

18. Dispositif selon l'une des revendications 15 à 17, caractérisé en ce que dans chacune des deux zones partielles (59, 60) de la zone de purification (28‴) sont disposées des bagues de guidage (64, 65) situées coaxialement et à distance d'autres parois de l'insert de puits (15‴).

19. Dispositif selon la revendication 18, caractérisé en ce que les ouvertures de buses sont disposées dans la paroi à buses (25‴) irrégulièrement et de telle sorte que de petites bulles de gaz (31‴) montent dans les deux zones partielles (59, 60) seulement sur un côté des bagues de guidage (64, 65).
